# NOUVEAU FASCICULE DE BREVET EUROPEEN

(11) **EP 2 141 371 B2**
(45) Date de publication et mention de la décision concernant l'opposition: **17.05.2017**
(45) Mention de la délivrance du brevet: 31.07.2013
(21) Numéro de dépôt: 09305504.4
(22) Date de dépôt: 02.06.2009
(51) Int. Cl.: F16C 3/10, B23P 15/00, B23K 20/02, B23K 20/12, B21K 1/08

(54) **Vilebrequin creux en deux parties et son procédé de fabrication**
Zweiteilige hohle Kurbelwelle und deren Herstellungsverfahren
Two-piece hollow crankshaft and process for its manufacture

(30) Priorité: 10.06.2008 FR 0853823
(43) Date de publication de la demande: 06.01.2010
(73) Titulaire: Forges de Courcelles, 52800 Nogent (FR)
(72) Inventeur: Boujon, Philippe, 52000 Chaumont (FR); Noirot, Michel, 52800 Nogent (FR); Schafer, Cyril, 52800 Marnay-sur-Marne (FR)
(74) Mandataire: Cabinet Laurent & Charras

(56) Documents cités:
- DD-A5- 298 071
- DE-A1- 3 729 992
- DE-A1- 19 838 225
- DE-C1- 19 536 349
- DE-T2- 69 313 131
- GB-A- 511 217
- US-A- 1 726 875
- US-A- 3 599 509
- US-A- 4 190 093
- "LEICHTBAU IM KURBELTRIEB DURCH GESCHMIEDETE KOMPONENTEN", UMFORMTECHNIK, MEISENBACH, BAMBERG, DE, vol. 33, no. 3, 1 septembre 1999 (1999-09-01), pages 18-20,22, XP000878277, ISSN: 0300-3167
- HAATS J ET AL: "LIGHTWEIGHT CRANKSHAFT DRIVES BY FORGING", STEEL TIMES, FUEL & METALLURGICAL JOURNALS LTD. LONDON, GB, vol. 227, no. 9, 1 septembre 1999 (1999-09-01), page 346/347, XP000865498, ISSN: 0039-095X
- Extrait de DUBBEL "Taschenbuch für den Maschinenbau" 22ième édition (2007), page G 6
- Extrait de DUBBEL "Taschenbuch für den Maschinenbau" 22ième édition (2007), pages S 17 à S20
- 'Welding Handbook Ninth Edition', vol. 3, partie 2 2007, AMERICAN WELDING SOCIETY, MIAMI page 422

## Description

L'invention se rattache au secteur technique des vilebrequins notamment pour moteurs requérant une lubrification par huile de graissage des paliers, ainsi qu'à la mise en oeuvre de vilebrequins creux par forgeage.

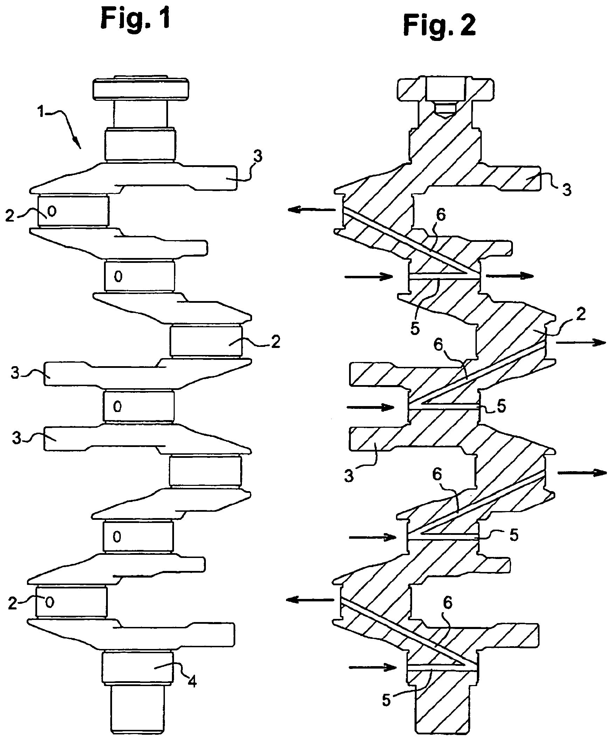

La fabrication de vilebrequins pleins par forgeage est illustrée par l'exemple figure 1 d'un vilebrequin (1) 4 cylindres en lignes qui présentent de manière bien courante une alternance de manetons (2) et contrepoids (3) avec tourillons (4) exigeant la mise en forme particulière de circuits de lubrification et de passage d'huile représentés figure 2. Ainsi, il est nécessaire de réaliser par paliers deux perçages (5) et (6), l'un (5) diamétralement dans les tourillons, l'autre (6) en oblique à travers les bras pour alimenter les manetons. Cette conception reste coûteuse à mettre en oeuvre avec une multiplication des circuits d'huile en vue d'assurer la lubrification.

On connaît par ailleurs le concept de vilebrequins creux, c'est-à-dire établis en deux demi-coquilles qui sont fixées par mécano soudure. Cette technique présente cependant certains inconvénients, et en particulier la rétention d'huiles dans certaines zones. La mise en oeuvre reste coûteuse également et la qualité de la liaison des deux demi-coquilles constituées du vilebrequin n'est pas toujours assurée.

On connaît, par des publications, la conception de vilebrequins creux forgés en deux demi-coquilles assemblées :
- « LEICHTBAU IM KURBELTRIEB DURCH GESCHMIEDETE KOMPONENTEN» publié par UNFORMTECHNIK MEISENBACH BAMBERG, Vol. 33, n° 3 du 1/09/1999,
- HAATS J ET AL « LIGHTWEIGHT CRANKSHAFT DRIVES BY FORGING » STEEL TIMES, FUEL & METALLURGICAL JOURNALS, Vol. 227, n° 9 du 1/09/1999.

La démarche du Demandeur a donc été de vouloir remédier à ces inconvénients en proposant une nouvelle solution de fabrication optimisant les caractéristiques du vilebrequin lui-même, et permettant l'obtention d'une liaison fiable entre les deux demi-coquilles du vilebrequin adaptée aux conditions d'utilisation de ceux-ci.

La solution du Demandeur a donc été de s'orienter différemment par un processus de fabrication spécifique en mettant en oeuvre la technologie du forgeage.

La solution apportée répond aux différents objectifs recherchés.

Le procédé de fabrication selon la revendication 1 met en oeuvre une liaison des deux demi-coquilles par le biais de lèvres, réalisée par friction linéaire avec un effet de compression pour leur maintien en contact.

Ces caractéristiques et d'autres encore ressortiront bien de la suite de la description.

Pour fixer l'objet de l'invention illustrée d'une manière non limitative aux figures des dessins où :
- la figure 1 est une vue d'un vilebrequin forgé selon l'art antérieur.
- la figure 2 est une vue en coupe du vilebrequin selon la figure 1 montrant les circuits de distribution du fluide de lubrification du type huile.
- la figure 3 est une vue en coupe d'un vilebrequin creux obtenu selon le procédé de l'invention et illustrant le circuit d'huile.
- les figures 4, 5 et 6 sont des vues à caractère schématique illustrant la mise en forme particulière des bordures des deux demi-coquilles du vilebrequin dans une version optimisée des lèvres de jonction en vue perspective de ¾ pour la figure 4, en vue de face avant assemblage pour la figure 5, et en vue de face après assemblage pour la figure 6.
- les figures 7A, 7B, 7C sont des vues en variante illustrant la forme des lèvres de jonction établies sur les bordures transversales des demi-coquilles du vilebrequin.
- la figure 7D est une variante non revendiquée illustrant des bordures transversales des demi-coquilles du vilebrequin.
- les figures 8A, 8B sont des vues à caractère schématique illustrant les zones de galetage de zones du vilebrequin dans les configurations d'un vilebrequin plein et creux avec zone de renfoncement.

Afin de rendre plus concret l'objet de l'invention, on le décrit maintenant d'une manière non limitative illustrée aux figures.

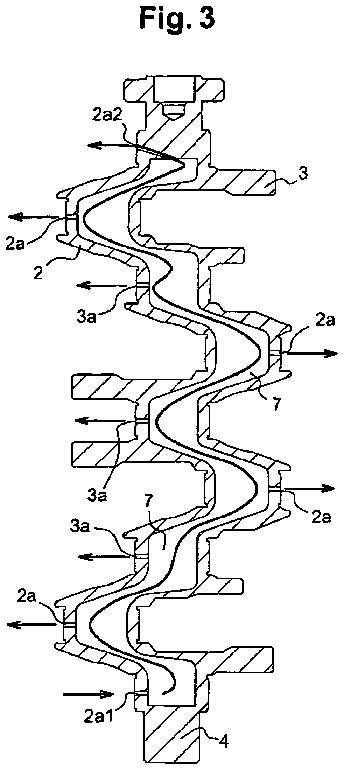

La figure 3 représente en coupe transversale une demi-partie du vilebrequin creux à obtenir selon l'invention, sous forme d'une demi-coquille (A) prête à être assemblée avec une seconde partie ou demi-coquille (B) de forme complémentaire. On a référencé par (2) les manetons, par (3) les contrepoids, par (4) les tourillons. Cette pièce est obtenue par forgeage à chaud. A l'endroit des manetons et tourillons, on a représenté les ouvertures (2a) et (3a) de passage de fluide obtenues par usinage après les opérations de forgeage et de soudage à la forge pour permettre la lubrification. Une seule entrée (2a1) de fluide de lubrification du type huile est prévue à une extrémité du vilebrequin, et une seule sortie (2a2) à l'autre extrémité. Une cavité intérieure (7) est ainsi formée et fermée lorsque les deux demi-parties ou coquilles sont assemblées.

La configuration intérieure de cette cavité est établie pour permettre l'écoulement du fluide dans de bonnes conditions et aussi la distribution du fluide à travers les ouvertures (2a) et (3a) précitées.

Les deux parties ou coquilles (A-B) du vilebrequin présentent une bordure périphérique (8) de sa paroi en épaisseur. Dans une mise en oeuvre non revendiquée, ladite bordure périphérique peut être non droite et perpendiculaire au plan transversal de la bordure. Au contraire selon l'invention, lesdites bordures sont conformées avec une saillie apparente formant lèvre (8a) destinée à leur liaison lors de l'assemblage.

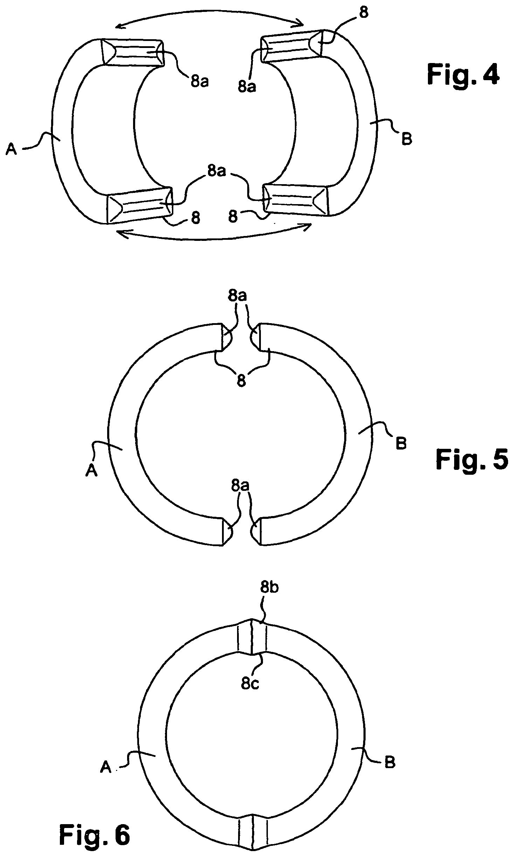

En se référant à la figure 5, lesdites lèvres (8a) sont parfaitement centrées dans la largeur de la bordure périphérique (8). Après assemblage des deux demi-coquilles, comme représenté figure 6, on obtient une partie débordante (8b) extérieure et une partie débordante intérieure (8c) par rapport à l'épaisseur de chaque demi-coquille. La partie (8b) est enlevée pour la face apparente lors de l'ébavurage, la partie intérieure n'étant pas modifiée.

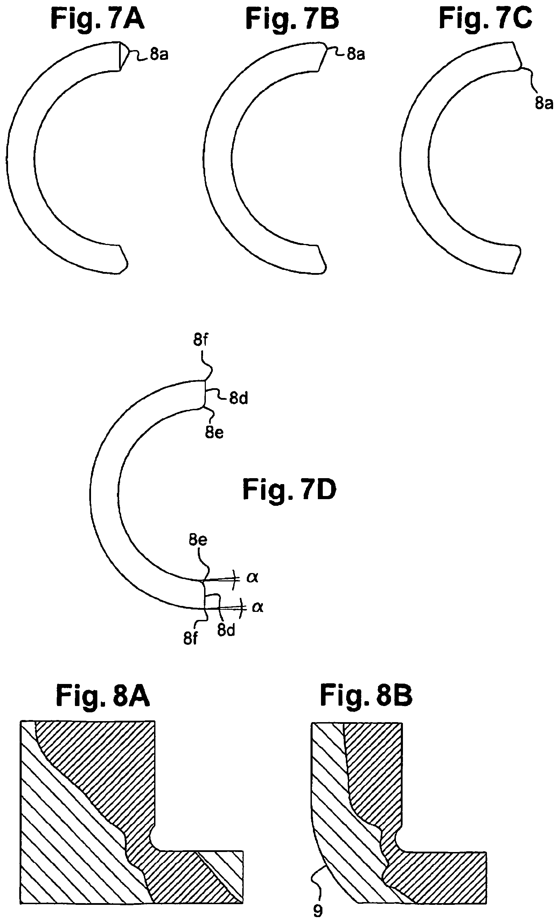

En se référant aux figures 7A, 7B, 7C, on a représenté le positionnement des lèvres (8a) différemment. Selon la figure 7A, les lèvres sont légèrement déportées côté extérieur avec un profil bombé. Selon la figure 7B, la partie lèvre est définie par l'orientation inclinée de la face transversale de la bordure périphérique de manière qu'après assemblage, il y ait un fluage de matière vers l'intérieur. La figure 7C représente une configuration similaire à celle de la figure 7B, mais avec la partie lèvre située côté intérieur de la bordure périphérique.

Dans la variante non revendiquée de la figure 7D, les lèvres (8d) sont planes afin d'avoir un congé (8e) à l'intérieur et une face dépouillée (8f) à l'extérieur selon une angulation α.

De manière importante, il est souligné que la géométrie des lèvres est importante par rapport à la température de soudage qui doit être homogène et à la qualité de soudage désiré. Les tests effectués par le Demandeur ont permis de mettre en valeur l'importance et la fonctionnalité desdites lèvres. Elles permettent de créer un effet de bord et de s'échauffer de manière homogène sur toute la surface à souder, et d'obtenir une bavure interne minime.

Le procédé s'effectue par un assemblage par soudure par friction linéaire.

Ce procédé consiste à apporter l'énergie calorifique suffisante par mise en mouvement d'une demi-coquille sur l'autre cumulé avec un léger effort de pression pour les maintenir en contact. Ce frottement génère l'échauffement de l'interface. Ensuite, comme pour le procédé, dans la première variante, on presse l'ensemble.

Les paramètres importants de cette mise en oeuvre sont :
- L'interface des demi-coquilles doit être plane afin de faciliter les mouvements linéaires.
- Les paramètres des mouvements linéaires sont établis suivant les nuances à souder : la fréquence et l'amplitude.
- L'effort de presse est fonction de la surface de l'interface et du volume de matière à souder.

Ce procédé permet également d'obtenir une très bonne structure métallurgique car il n'y a pas de fusion à l'interface. Il est possible de réaliser cette opération sous atmosphère contrôlée afin de limiter la présence d'oxyde.

De même, ce procédé, étant une opération rapide, est un procédé incorporable dans une ligne de production industrielle.

La mise en oeuvre de la fabrication du vilebrequin creux selon l'invention offre un avantage spécifique en ce qu'en vue des opérations de galetage figure 8A, 8B, certaines zones locales (9) du vilebrequin pourront être renforcées par une augmentation locale de l'épaisseur de la paroi des deux demi-coquilles destinées à être assemblées.

L'invention offre de nombreux avantages :
- un allègement du poids du vilebrequin et conséquemment son influence sur le poids du véhicule ;
- une simplification de l'usinage du système de lubrification ;
- une puissance de presse réduite pour la réalisation des deux demi-coquilles ;
- la configuration de leur rail selon les surfaces à souder qui sont soudées sur toute l'épaisseur de la paroi grâce à une chauffe homogène, la zone de soudure ne présentant pas de défaut métallurgique.
- la position actuelle des trous de graissage n'est pas la plus judicieuse par rapport au besoin, mais est imposée par la nécessité de passer par les bras de liaison, alors que dans la solution du Demandeur, les trous sont disposés aux endroits adéquats (zones de basse pression sur les paliers).
- le vilebrequin étant creux, il y a donc moins d'inertie mise en oeuvre, les montées en régime du moteur sont donc meilleures.
- le vilebrequin étant creux, sa masse est donc moins importante, ce qui fait qu'il y a baisse de la consommation du véhicule et une meilleure contribution aux normes anti-pollution.
- il peut y avoir réduction des contre-poids, donc réduction du carter moteur ou alors augmentation de la capacité en huile du moteur, espaçant les vidanges.

## Revendications

1. Procédé de fabrication d'un vilebrequin creux en deux demi-parties destinées à être assemblées mettant en oeuvre les phases suivantes :
- réalisation par forgeage à chaud des deux demi-coquilles (A, B) du vilebrequin en réalisant, le long de la bordure périphérique (8) de chaque demi-coquille, une forme destinée à leur liaison,
- assemblage des deux demi-coquilles (A, B) en mettant face à face les bordures de chacune d'elles,
- ébavurage du vilebrequin sur la partie extérieure de jonction des deux demi-coquilles et usinage des ouvertures (2a-3a) établies sur les manetons (2) et contrepoids (3) pour le passage du fluide de lubrification,
**caractérisé en ce que** la bordure périphérique (8) de chaque demi-coquille (A, B) est pourvue d'une saillie apparente formant lèvre (8a),
**et en ce que** l'assemblage des deux demi-coquilles (A, B) est réalisé en mettant face à face les bordures (8) de chacune d'elles à l'endroit de leurs lèvres (8a) en vue de leur soudure,
**et en ce que** la soudure est réalisée par friction linéaire.

2. Procédé, selon la revendication 1, **caractérisé en ce que** l'opération de soudure s'effectue sous atmosphère contrôlée afin de limiter la pression d'oxygène.

3. Procédé, selon la revendication 1, **caractérisé en ce que** les lèvres (8a) sont centrées dans la largeur de la bordure périphérique.

4. Procédé, selon la revendication 1, **caractérisé en ce que** les lèvres (8a) sont déportées côté extérieur de la bordure périphérique avec un profil bombé.

5. Procédé, selon la revendication 1, **caractérisé en ce que** les lèvres (8a) sont déportées côté intérieur de la bordure périphérique avec un profil bombé.

## Patentansprüche

1. Verfahren zur Herstellung einer hohlen Kurbelwelle, bestehend aus zwei Halbteilen, die dazu bestimmt sind, in der Abwicklung folgender Phasen, zusammengesetzt zu werden:
- Heißschweißvorgang, bei dem die zwei Halbschalen (A, B) der Kurbelwelle entlang des äußeren Randes (8) jeder Halbschale, eine Form erhalten, die zu deren Verbindung bestimmt ist,
- Zusammenfügen der zwei Halbschalen (A, B), wobei deren Ränder gegenüber angesetzt werden,
- Außenentgraten der Kurbelwelle an der Verbindungsnaht der zwei Halbschalen und Bearbeitung der entstandenen Öffnungen (2a-3a) auf den Zapfen (2) und Gegengewichten (3) für den Durchfluss der Schmiermittelflüssigkeit,
**dadurch gekennzeichnet,**
**dass** der äußere Rand (8) jeder Halbschale (A, B) eine sichtbare Auswölbung aufweist, die die Form einer Lippe (8a) bildet, und
**dass** das Zusammenfügen der zwei Halbschalen (A, B) derart erfolgt, dass deren jeweiligen Ränder (8) hinsichtlich ihrer Schweißnaht an der Stelle ihrer Lippen (8a) gegenüber angesetzt werden, und
**dass** die Schweißnaht durch ein lineares Reibungsschweißen hergestellt wird.

2. Verfahren nach der Ansprüche 1, **dadurch gekennzeichnet, dass** der Schweißvorgang in einer kontrollierten Atmosphäre erfolgt, um den Sauerstoffdruck zu begrenzen.

3. Verfahren nach der Ansprüche 1, **dadurch gekennzeichnet, dass** die Lippen (8a) in der Breite der umlaufenden Umrandung zentriert sind.

4. Verfahren nach der Ansprüche 1, **dadurch gekennzeichnet, dass** die Lippen (8a) mit einem gewölbten Profil an die innere Seite der umlaufenden Umrandung verschoben sind

5. Verfahren nach der Ansprüche 1, **dadurch gekennzeichnet, dass** die Lippen (8a) mit einem gewölbten Profil an die äußere Seite der umlaufenden Umrandung verschoben sind.

## Claims

1. A method for the manufacturing of a hollow crankshaft in two halves intended to be assembled together by carrying out the steps of:
- producing by hot forging two crankshaft half-shells (A, B) by forming, along the length of the peripheral rim (8) of each half-shell, a shape allowing them to be joined,
- assembling the two half-shells (A, B) by placing each of their rims (8) opposite to each other,
- deburring the crankshaft on the outer portion of the junction between the two half-shells and machining the openings (2a-3a) formed on the crankpins (2) and counterweights (3) for the flow of lubricating fluid,
**characterized in that** the peripheral rim (8) of each half-shell (A, B) is provided with a protrusion forming a lip (8a),
**and in that** the assembly of the two half-shells (A, B) is performed by placing the rims (8) of each of them opposite to each other at their lips (8a) in view of welding them together,
**and in that** the welding is carried out by means of linear friction.

2. The method according to claim 1, **characterized in that** the welding operation is carried out under a controlled atmosphere in order to limit the oxygen pressure.

3. The method according to claim 1, **characterized in that** the lips (8a) are centred within the width of the peripheral rim.

4. The method according to claim 1, **characterized in that** the lips (8a) are displaced with a bulging profile towards the outer edge of the peripheral rim.

5. The method according to claim 1, **characterized in that** the lips (8a) are displaced with a bulging profile towards the inner edge of the peripheral rim.
